# EUROPEAN PATENT SPECIFICATION

(11) **EP 2 485 300 B1**
(45) Date of publication and mention of the grant of the patent: **23.08.2017**
(21) Application number: 09849828.0
(22) Date of filing: 28.09.2009
(51) Int. Cl.: H01M 4/36, H01M 2/16, H01M 4/587, H01M 4/133, H01M 10/052, H01M 4/02, H01M 4/62

(54) **LITHIUM SECONDARY BATTERY AND MANUFACTURING METHOD THEREFOR**
LITHIUMIONEN-SEKUNDÄRBATTERIE UND HERSTELLUNGSVERFAHREN DAFÜR
BATTERIE SECONDAIRE AU LITHIUM ET PROCÉDÉ DE SA FABRICATION

(43) Date of publication of application: 08.08.2012
(73) Proprietor: TOYOTA JIDOSHA KABUSHIKI KAISHA, Toyota-shi, Aichi-ken, 471-8571 (JP)
(72) Inventor: UEKI, Tomoyoshi, Toyota-shi Aichi 471-8571 (JP); TAKAHATA, Koji, Toyota-shi Aichi 471-8571 (JP); TAKAHASHI, Masaya, Toyota-shi Aichi 471-8571 (JP); TAKENAKA, Hiroe, Toyota-shi Aichi 471-8571 (JP); SUMI, Mariko, Toyota-shi Aichi 471-8571 (JP); OKUBO, Mika, Toyota-shi Aichi 471-8571 (JP)
(74) Representative: TBK
(86) International application number: PCT/JP2009/066776
(87) International publication number: WO 2011/036797

(56) References cited:
- EP-A1- 1 667 255
- WO-A1-2005/124899
- CN-A- 1 925 192
- JP-A- 2007 109 633
- JP-A- 2007 220 454
- JP-A- 2009 043 715
- JP-A- 2009 164 014
- JP-A- 2009 211 824
- US-A1- 2005 158 550

## Description

### TECHNICAL FIELD

The present invention relates to a lithium secondary battery having a configuration in which an insulating layer composed primarily of an insulating filler is formed on a negative electrode active material layer, and relates to a method for producing the same.

### BACKGROUND ART

Secondary batteries such as lithium secondary batteries and nickel-metal hydride batteries have become more important recently as a vehicle-mounted electric power source using electricity as the driving source, as well as for use in personal computers, portable devices, and other electronic goods, etc. In particular, it is expected that lithium secondary batteries (typically lithium-ion batteries), which are lightweight and can provide high energy density, can be preferably used as a high output electric power source for vehicles (e.g., automobiles, and in particular hybrid automobiles and electric automobiles).

Such a lithium secondary battery is typically configured by laminating together electrodes (positive electrode and negative electrode) interposed by a separator, wherein each electrode comprises electrode active material layers (positive electrode active material layer and negative electrode active material layer) capable of reversibly absorbing and desorbing a charge carrier (lithium ions) that are formed on the surfaces of their respective electrode collectors. Patent Document 1, Patent Document Patent 2, and Document 3 can be noted as examples of prior art that have investigated the openings (pores) that are formed in the electrode active material and become the migration paths for the charge carriers in this type of lithium secondary battery. In Patent Document 1, an increase in battery capacity was achieved by establishing the pore diameter, pore distribution, etc., in the negative electrode mixture (active material layer) within a given range. Moreover, Patent Document 2 discloses a safer lithium secondary battery obtained by setting the pore distribution, etc., of the negative electrode active material layer. Furthermore, in Patent Document 3 the pore diameter and pore volume of the carbon material functioning as a constituent material of the negative electrode were investigated.

### Prior Art Documents

### Patent Literature

Patent Document 1: Japanese Patent Application Laid-open No. H9-129232
Patent Document 2: Japanese Patent Application Laid-open No. 2001-43899
Patent Document 3: Japanese Patent Application Laid-open No. 2003-297352

EP 1 667 255 A1 constitutes an additional prior art document.

### SUMMARY OF THE INVENTION

### Problem(s) to be Solved by the Invention

Incidentally, the method wherein a layer (hereafter, "insulating layer") composed primarily of an insulating inorganic material (insulating filler) is formed on the surface of the negative electrode active material layer is known as one means of preventing separation of the negative electrode active material layer and internal shorts caused by deposition of dendritic crystals occurring on the negative electrode, etc. Not only can establishing such an insulating layer be one effective means for improving the reliability (prevention of internal shorts, etc.) of a lithium secondary battery, but it can also contribute to an increase in battery durability. If appropriate pores are not formed in the insulating layer, however, an insulating layer provided on the surface of the negative electrode active material layer can be a factor that causes an increase internal resistance due to partial blockage of the conductive paths and hindrance of the migration of the charge carrier (lithium ions).

Therefore, the present invention was created in order to solve the above problems relating to previous lithium secondary batteries, and an object of the present invention is to provide a lithium secondary battery comprising a negative electrode in which an insulating layer composed primarily of an insulating filler is formed on the surface of the negative electrode active material layer, and by improving the nature of the insulating layer, this lithium secondary battery has a suppressed increase in internal resistance and excellent battery characteristics (cycling characteristics and high rate characteristics) as a high output electrical power source for vehicles. A further object of the present invention is to provide a vehicle equipped with this kind of lithium secondary battery.

### Means for Solving the Problem(s)

To realize the above object the present invention provides a lithium secondary battery comprising a negative electrode having a negative electrode collector and a negative electrode layer including a negative electrode active material and formed on the surface of the negative electrode collector. The negative electrode layer of the lithium secondary battery in the present invention comprises a negative electrode active material layer composed primarily of a negative electrode active material, and an insulating layer composed primarily of an insulating filler and formed on the negative electrode active material layer, wherein a ratio (Sb/Sa) of a pore specific surface area of the insulating layer (Sb: m²/g) to a pore specific surface area of the negative electrode active material layer (Sa: m²/g), as measured by a mercury porosimeter, satisfies the relationship 1.2 ≤ (Sb/Sa) ≤ 2.5.

It should be noted that the term "lithium secondary battery" in this description refers to a secondary battery that uses lithium ions as the electrolytic ions and in which charging and discharging is realized through the migration of lithium ions between the positive and negative electrodes. Secondary batteries generally known as lithium-ion batteries are a typical example of the lithium secondary battery in this description.

Moreover, the term "negative electrode active material" in this description refers to a material on the negative electrode that can reversibly absorb and desorb (typically load and release) a chemical species (in this case, lithium ions) serving as the charge carrier in the secondary battery.

The negative electrode of the lithium secondary battery in the present invention includes a negative electrode layer of a configuration in which an insulating layer is laminated onto the negative electrode active material layer formed on the surface of the negative electrode collector. Internal shorts, etc., resulting from the separation of the negative electrode active material layer from the negative electrode collector can be prevented by the presence of an insulating layer composed primarily of an insulating filler. Furthermore, the negative electrode layer of the lithium secondary battery disclosed herein is formed such that the ratio (Sb/Sa) of the pore specific surface area of the insulating layer (Sb: m²/g) to the pore specific surface area of the negative electrode active material layer (Sa: m²/g), as measured by the mercury porosimeter, satisfies the relationship 1.2 ≤ (Sb/Sa) ≤ 2.5. By having this ratio lie within this range, pores of a suitable size for the paths (conductive paths) through which the charge carriers will migrate are formed in the insulating layer as well as in the negative electrode active material layer. Therefore, the migration of lithium ions between the negative electrode collector, negative electrode active material layer, and insulating layer can occur efficiently through the pores in the insulating layer and negative electrode active material layer that are impregnated with (retained) the electrolyte solution. As a result, it is possible to provide a lithium secondary battery that has a suppressed increase in internal resistance, excellent battery characteristics (cycling characteristics and high rate characteristics) and favorable low temperature cycling characteristics, particularly under low temperature pulse charge/discharge conditions.

Moreover, in a pore distribution of the negative electrode layer as measured by the mercury porosimeter, the mode diameter of the pores in the negative electrode active material layer is 0.19 µm to 0.21 µm and the mode diameter of the pores in the insulating layer is 0.72 µm to 0.75 µm.

Suitable migration paths for the charge carriers (lithium ions) are formed in the negative electrode layer when the mode diameter of the pores in the insulating layer is larger than the mode diameter of the pores in the negative electrode active material layer, and when the respective mode diameters lie within the above ranges. As a result, a lithium secondary battery with superb conductivity can be provided wherein excellent conductive paths are formed between the negative electrode collector and the negative electrode layer (and between the negative electrode active material layer and insulating layer), and the deposition of dendrites due to the presence of lithium metal is inhibited.

In another preferred embodiment of the lithium secondary battery disclosed herein, a carbon material with a mean particle size (median diameter) of 1 µm to 50 µm based on a laser diffraction particle size distribution measurement is used as the negative electrode active material, and an inorganic oxide with a mean particle size (median diameter) of 0.1 µm to 15 µm based on the laser diffraction particle size distribution measurement is used as the insulating filler.

Moreover, in another preferred embodiment, at least one material selected from the group consisting of alumina (e.g., α-alumina particles), silica, and magnesia is used as the inorganic oxide.

Suitable pores are formed within the layer of a negative electrode layer that has been formed using materials comprising these kinds of mean particle sizes. Hence, the migration of the charge carriers (lithium ions) is not hindered, and as a result, it is possible to provide a lithium secondary battery that has a suppressed increase in internal resistance and excellent battery characteristics (high rate characteristics and cycling characteristics).

Moreover, as another aspect for realizing the above-mentioned object, the present invention provides a method for producing a lithium secondary battery including a negative electrode having a negative electrode collector and a negative electrode layer including a negative electrode active material and formed on the surface of the negative electrode collector. The production method disclosed herein involves providing a negative electrode active material layer composed primarily of a negative electrode active material on the surface of the negative electrode collector, and providing an insulating layer composed primarily of an insulating filler on the negative electrode active material layer, to thereby prepare a negative electrode in which a negative electrode layer comprising the negative electrode active material layer and the insulating layer is formed on the negative electrode collector. Moreover, the production method is characterized in that the negative electrode layer is formed such that a ratio (Sb/Sa) of a pore specific surface area of the insulating layer (Sb: m²/g) to a pore specific surface area of the negative electrode active material layer (Sa: m²/g), as measured by a mercury porosimeter, satisfies the relationship 1.2 ≤ (Sb/Sa) ≤ 2.5.

Internal shorts, etc., that can occur due to the separation of the negative electrode active material layer from the negative electrode collector can be prevented by forming an insulating layer composed primarily of an insulating filler on the negative electrode active material layer. Furthermore, in the production method disclosed herein, the negative electrode layer is formed such that the ratio (Sb/Sa) of the pore specific surface area of the insulating layer (Sb: m²/g) to the pore specific surface area of the negative electrode active material layer (Sa: m²/g), as measured by the mercury porosimeter, satisfies the relationship 1.2 ≤ (Sb/Sa) ≤ 2.5. Thus, because the ratio of the pore specific surface area of the insulating layer to the pore specific surface area of the negative electrode active material layer lies within this range, pores of a suitable size can be formed in the insulating layer as paths that the charge carriers will migrate through (conductive paths). Therefore, the movement of electrons can occur efficiently between the negative electrode collector, insulating layer, and negative electrode active material layer through the pores in the insulating layer and the negative electrode active material layer that are impregnated with the electrolyte solution. As a result, it is possible to provide a method for producing a lithium secondary battery that has a suppressed increase in internal resistance, excellent battery characteristics (cycling characteristics and high rate characteristics), and favorable low temperature cycling characteristics, particularly under low temperature pulse charge/discharge conditions.

Moreover, the negative electrode active material layer is formed such that the mode diameter of pores therein is 0.19 µm to 0.21 µm in a pore distribution of the negative electrode layer as measured by the mercury porosimeter, and the insulating layer is formed such that the mode diameter of pores therein is 0.72 µm to 0.75 µm in the pore distribution.

Suitable migration paths for the charge carriers (lithium ions) are formed in the negative electrode layer by forming the negative electrode layer such that the size of the pores in the insulating layer is larger than the size of the pores in the negative electrode active material layer, and the respective mode diameters lie within the above ranges. As a result, a method is provided for producing a lithium secondary battery with superb conductivity wherein excellent conductive paths are formed between the negative electrode collector and the negative electrode layer (and between the negative electrode active material layer and the insulating layer), and the deposition of dendrites due to the presence of lithium metal is inhibited.

Moreover, preferably a carbon material with a mean particle size (median diameter) of 1 µm to 50 µm based on a laser diffraction particle size distribution measurement is used as the negative electrode active material, and an inorganic oxide with a mean particle size (median diameter) of 0.1 µm to 15 µm based on the laser diffraction particle size distribution measurement is used as the insulating filler.

Moreover, in another preferred embodiment at least one material selected from the group consisting of alumina (e.g., α-alumina particles), silica, and magnesia is used as a suitable example of the inorganic oxide.

The negative electrode active material layer and the insulating layer can be formed by using materials comprising the above mean particle sizes, and suitable pores are formed in the layers of a negative electrode layer formed therefrom. Thus, the migration of the charge carriers (lithium ions) that takes place between the electrodes is not hindered, and the absorption and desorption of lithium ions occurs more smoothly. As a result, it is possible to provide a method for producing a lithium secondary battery that has a suppressed increase in internal resistance and excellent battery characteristics (high rate characteristics and cycling characteristics).

Moreover, the present invention provides a vehicle provided with any of the lithium secondary batteries disclosed herein (lithium secondary batteries produced by any of the production methods disclosed herein). The lithium secondary batteries provided by the present invention, as noted above, can demonstrate suitable battery characteristics (cycling characteristics and high rate characteristics) as a battery power source to be mounted in a vehicle, particularly good low temperature cycling characteristics under low temperature, high rate charge/discharge conditions. Therefore, the lithium secondary batteries disclosed herein can be preferably used as the electric power source for motors (electric motors) to be mounted in vehicles such as hybrid automobiles and automobiles equipped with the kinds of electric motors found in electric automobiles.

### BRIEF DESCRIPTION OF THE DRAWINGS

FIG. 1 is a perspective view schematically illustrating the exterior of the lithium secondary battery in one embodiment.
FIG. 2 is a cross-sectional drawing of line II-II in FIG. 1.
FIG. 3 is a cross-sectional drawing illustrating the wound electrode assembly comprising the positive electrode and negative electrode and the separators in one embodiment.
FIG. 4 is a side view schematically illustrating a vehicle (an automobile) provided with the lithium secondary battery in one embodiment.
FIG. 5 is a graph illustrating the pore distribution of the negative electrode layer in a example and a comparative example as measured by a mercury porosimeter.
FIG. 6 is a perspective drawing schematically illustrating the shape of a model 18650 lithium secondary battery.
FIG. 7 is a graph illustrating the relationship between the ratio of the pore specific surface area of the insulating layer to the pore specific surface area of the negative electrode active material layer plotted against the capacity retention.

### MODES FOR CARRYING OUT THE INVENTION

A preferred embodiment of the present invention is described below. It should also be noted that matters necessary for carrying out the present invention other than those specifically referred to in the description are understood to be matters of design for a person skilled in the art based on the prior art in this field. The present invention can be carried out on the basis of the content disclosed herein and common technical knowledge in this field.

First, each of the constituent elements of the negative electrode of the lithium secondary battery in this embodiment will be described. As described above, the negative electrode disclosed herein has a negative electrode collector and a negative electrode layer containing a negative electrode active material and formed on the surface of the electrode collector, and the negative electrode layer comprises a negative electrode active material layer composed primarily of a negative electrode active material and an insulating layer composed primarily of an insulating filler and formed on the negative electrode active material layer.

A material capable of absorbing and desorbing lithium ions can be used as the negative electrode active material constituting the negative electrode active material layer of the negative electrode disclosed herein, and a suitable material can be selected from among the various negative electrode active materials that are generally used in lithium secondary batteries. For example, carbon particles can be noted as a suitable negative electrode active material. Preferably a particulate carbon material (carbon particles) at least partly comprising a graphite structure (layered structure) is used. So-called graphites, hard carbons, soft carbons, and any carbon material having a combination of these structures can be suitably used. Among these, the use of graphite particles is particularly preferred. Graphite particles have excellent conductivity because they can suitably absorb lithium ions as charge carriers. Moreover, they can serve as a negative electrode active material suited for more high output pulse charging and discharging because they have a small particle size and a large surface area per unit volume.

The use of carbon particles with a mean particle size (median diameter) of approximately 1 µm to 50 µm, preferably approximately 1 µm to 20 µm, for example approximately 5 µm to 15 µm, is preferred as the negative electrode active material (typically a particulate, and preferably carbon particles such as graphite particles). A mean particle size (median diameter: d50) measured on a volumetric basis using a typical commercially available granulometer (laser diffraction particle size distribution measurement device, etc.) can be used as the value for the mean particle size. Carbon particles with this kind of relatively small particle size can serve as a negative electrode active material suited for more rapid charging and discharging (e.g., high output discharging) because they have a large surface area per unit volume. Therefore, a lithium secondary battery comprising this negative electrode active material can be preferably used as a lithium secondary battery to be mounted in a vehicle, for example.

Moreover, a filler composed primarily of various non-conductive inorganic materials and/or organic materials (resin materials, paper, wood, etc.) can be used as the insulating filler comprising the insulating layer of the negative electrode disclosed herein. The use of an inorganic filler composed primarily of inorganic materials is preferable from the perspectives of durability and reliability. For example, particles (ceramic particles) comprising a non-conductive inorganic compound can be preferably used as the insulating filler. This inorganic compound can be a metallic or non-metallic oxide, carbide, silicide, nitride, etc. An inorganic oxide filler comprising a particulate oxide such as alumina (Al₂O₃), silica (SiO₂), zirconia (ZrO₂), or magnesia (MgO) can be preferably used from the perspectives of chemical stability and raw material costs, etc. Moreover, particularly preferred insulating fillers are alumina particles (e.g., α-alumina particles), silica, and magnesia. It should be noted that alumina particles can be particles in which a plurality of primary particles are linked together. These kinds of linked particles can be produced based on common technical knowledge in this field or a corresponding commercially available material can be obtained.

The mean particle size (median diameter) of the insulating filler (preferably an inorganic oxide filler such as alumina particles) can be approximately 0.1 µm to 15 µm, preferably 0.1 µm to 5 µm, and for example, 0.5 µm to 3 µm. A mean particle size (median diameter: d50) measured on a volumetric basis using a typical commercially available granulometer (laser diffraction particle size distribution measurement device, etc.) can be used as what is referred to as "mean particle size" herein. An insulating layer formed using a filler having the above mean particle size will form pores that can more readily exhibit the effect resulting from application of the present invention.

Moreover, an optional ingredient such as a binders can be included in the negative electrode active material layer and the insulating layer disclosed herein as needed. The same kind of binder, etc., that is used in the negative electrode of typical lithium secondary batteries can be suitably used as the binder. Preferably a polymer that is soluble or dispersible in the solvent to used will be selected.

For example, water-soluble and water-dispersible polymers including cellulose polymers such as carboxymethyl cellulose (CMC) and hydroxypropyl methylcellulose (HPMC); polyvinyl alcohol (PVA); fluorine resins such as polytetrafluoroethylene (PTFE) and tetrafluoroethylene-hexafluoropropylene copolymers (FEP); vinyl acetate copolymers; and rubbers such as styrene-butadiene rubber (SBR) and acrylic acid modified SBR resins (SBR latex) can be preferably used when an aqueous solvent is used.

Moreover, polymers such as polyvinylidene difluoride (PVDF) and polyvinylidene chloride (PVDC) can be preferably used when a nonaqueous solvent is used. Only one type of this kind of binder can be used alone, or two or more types can be combined and used together. It should also be noted that the polymer material listed above can be used as a thickener or as an additive with another desired function in addition to its function as a binder.

Either an aqueous solvent or a nonaqueous solvent can be used as the solvent. The aqueous solvent is typically water, but any medium exhibiting aqueous properties, i.e. water or a mixed solvent composed primarily of water, can be preferably used. As a solvent other than water that constitutes the mixed solvent one or more types of organic solvent (lower alcohols, lower ketones, etc.) that can mix homogenously with water can be suitably selected and used. For example, preferably an aqueous solvent that is approximately 80 mass% or more water (more preferably approximately 90 mass% or more, even more preferably 95 mass% or more) is used. Solvents substantially comprising water can be noted as particularly preferable examples. Moreover, N-methyl-2-pyrrolidone (NMP), methyl ethyl ketone, toluene, etc., can be listed as suitable examples of nonaqueous solvents.

Next the method for fabricating the negative electrode of the lithium secondary battery disclosed herein will be described. The negative electrode of the technology disclosed herein includes a negative electrode collector and a negative electrode layer including a negative electrode active material and formed on the surface of the negative electrode collector. This negative electrode layer comprises a negative electrode active material layer and an insulating layer, and it can be formed on a negative electrode collector by providing a negative electrode active material layer composed primarily of a negative electrode active material on the surface of the negative electrode collector, and then providing an insulating layer composed primarily of an insulating filler on the negative electrode active material layer.

First, a negative electrode active material and one or more types of binder listed above are added to a suitable solvent and dispersed or dissolved to prepare a paste or a slurry composition for forming the negative electrode active material layer, which is then applied to a negative electrode collector and pressed after drying to form the negative electrode active material layer. The negative electrode active material layer can be formed on the negative electrode collector by this process.

Although not particularly limited herein, in the composition for forming the negative electrode active material layer, preferably the concentration of solids (the nonvolatile portion, i.e., the ratio of the ingredients that form the negative electrode active material layer in the composition) is, for example, approximately 40 mass% to 60 mass%. Moreover, the content ratio of the negative electrode active material comprising the solid portion (the component forming the negative electrode active material layer) can be, for example, approximately 80 mass% or more (typically approximately 80 mass% to 99.9 mass%), preferably approximately 90 mass% to 99 mass% and more preferably approximately 95 mass% to 99 mass%. For example, in the negative electrode active material composition with a formulation containing a binder as noted above, the mass ratio of the negative electrode active material to the binder (negative electrode active material: binder) in the composition can be set at approximately 80:20 to 99.5:0.5, and the mass ratio can also be approximately 95:5 to 99:1.

In this case, a conductive material comprising a metal with good conductivity can be preferably used as the negative electrode collector to which the composition for forming the negative electrode active material layer is applied. In particular, preferably a negative electrode collector made from copper (Cu) or an alloy composed primarily of copper is used. Moreover, the shape of the negative electrode collector is not limited herein because the shape, etc., of the lithium secondary battery constructed using the resulting negative electrode can differ as needed. The technology disclosed herein can be preferably used in a lithium secondary battery (e.g., a lithium secondary battery comprising a wound electrode assembly) that includes, for example, a negative electrode in a mode wherein a negative electrode active material layer is retained on the surface of an electrode collector in the form of a sheet or foil.

It should be noted that the same techniques used in prior art, publicly known methods can be suitably used as the method for applying the composition for forming the negative electrode active material layer to the negative electrode collector. For example, the abovementioned paste can be preferably applied to the negative electrode collector by using a suitable application device such as a slit coater, die coater, gravure coater, or comma coater. Moreover, the solvent can be suitably dried off by using natural (air) drying, heated air, low humidity air, vacuum, infrared radiation, far infrared radiation, or an electron beam either alone or in combination. Furthermore, prior art, publicly known pressing methods such as roll pressing and plate pressing can be used as the pressing method. When adjusting the thickness, the thickness can be measured with a coating thickness gauge and multiple pressings can be performed while adjusting the pressing pressure until the desired thickness is achieved.

Then after the negative electrode active material layer has been formed, the insulating layer comprising the insulating filler is formed thereon. The insulating layer of the negative electrode disclosed herein can be formed over substantially the entire surface of the negative electrode active material layer or can be formed on only a portion of the surface of the negative electrode active material layer. Under normal circumstances, preferably a configuration is used wherein the insulating layer is formed such that at least it covers substantially the entire surface of the negative electrode active material layer from perspectives such as the effect that results from forming the insulating layer and the durability of the negative electrode active material layer. It should also be noted that in a negative electrode of a mode wherein a negative electrode active material layer is formed on the surface of the negative electrode collector, if a part of the negative electrode collector where the negative electrode active material layer is not formed remains, then the negative electrode can be configured so that part of the insulating layer extends up to that part where the negative electrode active material layer is not formed as far as the effect of the present invention is not lost.

As the method for forming the insulating layer on the negative electrode active material layer, the insulating filler and one or more types of the polymer material listed above as a binder are dispersed or dissolved in a suitable solvent to prepare a paste or a slurry composition for forming the insulating layer, which is then applied to the surface of the negative electrode active material layer and pressed after the solvent is dried off. A negative electrode for a lithium secondary battery comprising an insulating layer formed on the negative electrode active material layer is obtained in this manner.

It should be noted that the binder used to form the insulating layer can be the same binder used to form the negative electrode active material layer or a different binder, but a mode wherein the types of binders used to form both layers are different is more preferable. For example, in one preferred embodiment a water-soluble binder (CMC, etc.) and/or a water-dispersible binder (SBR, etc.) can be used in the negative electrode active material layer, and a binder that can be dissolved in an organic solvent (PVDF, etc.) can be used in the insulating layer. The moisture resistance and the resistance to swelling of the negative electrode active material layer that is not in direct contact with the electrolyte solution (typically a nonaqueous electrolyte) are improved thereby, and as a result, a lithium secondary battery with excellent quality that can manifest long-term use can be provided.

Moreover, in the composition for forming the insulating layer, the mass ratio of the insulating filler to the binder (insulating filler : binder) can be set, for example, at approximately 80:20 to 99.5:0.5. This mass ratio can also be approximately 95:5 to 99:1. The insulating layer tends to have inadequate durability if the proportion of binder is much less than in the above mass ratios. Conversely, if the proportion of binder is much more than in the above mass ratio, adverse effects on battery performance caused by forming the insulating layer (such as a decline in initial capacity, etc.) can appear.

The separation of the negative electrode active material layer as well as internal shorts due to the deposition of dendritic crystals occurring on the negative electrode can be prevented by providing such an insulating layer on the negative electrode active material layer, but the conductive paths can become partially blocked, and there may be an increase in internal resistance due to the hindrance of the migration of the charge carriers (lithium ions) if the pores in the insulating layer are not suitably formed. It is particularly important to suppress the increase in internal resistance caused by an insulating layer in batteries (e.g., lithium secondary batteries for use as the electric power source in vehicles) that require rapid discharge capabilities in low temperature environments. Therefore, the negative electrode active material layer and the insulating layer of the negative electrode layer in the technology disclosed herein are formed such that the ratio (Sb/Sa) of a pore specific surface area of the insulating layer (Sb: m²/g) to a pore specific surface area of the negative electrode active material layer (Sa: m²/g), as measured by a mercury porosimeter, satisfies the relationship 1.2 ≤ (Sb/Sa) ≤ 2.5, preferably 1.2 ≤ (Sb/Sa) ≤ 2, and more preferably 1.3 ≤ (Sb/Sa) ≤ 1.8. Because the ratio of the pore specific surface area of the insulating layer to the pore specific surface area of the negative electrode active material layer lies within this range, pores of a suitable size for the paths through which the charge carriers will migrate (conductive paths) are formed in both the insulating layer and the negative electrode active material layer. Therefore, the migration of lithium ions between the negative electrode collector, negative electrode active material layer, and insulating layer through the pores in the insulating layer and negative electrode active material layer that are impregnated with (retain) an electrolyte solution can occur efficiently, and as a result, the increase in internal resistance can be suppressed.

Moreover, the negative electrode active material layer and the insulating layer of the negative electrode disclosed herein are formed such that the mode diameter of the pores in the negative electrode active material layer is 0.19 µm to 0.21 µm (e.g., 0.2 µm to 0.21 µm, preferably generally 0.2 µm) and the mode diameter of the pores in the insulating layer is 0.72 µm to 0.75 µm (e.g., 0.73 µm to 0.74 µm, and preferably generally 0.73 µm) in the negative electrode layer pore distribution as measured by the mercury porosimeter. The pores in the negative electrode layer (negative electrode active material layer and insulating layer) can form suitable migration paths for the charge carriers (lithium ions) when the negative electrode active material layer and the insulating layer are formed such that the mode diameter of the pores in the insulating layer is larger than the mode diameter of the pores in the negative electrode active material layer, and additionally when the respective mode diameters lie within the abovementioned ranges. Conductive paths are formed and the deposition of dendrites due to the presence of lithium metal can be inhibited thereby.

The lithium secondary battery in the present invention is characterized in that it includes a negative electrode of the above configuration comprising a negative electrode active material layer composed primarily of a negative electrode active material and an insulating layer composed primarily of an insulating filler and formed thereon. Therefore, the components of a lithium secondary battery (e.g., positive electrode, electrolyte, separator, etc.) other than the negative electrode disclosed herein are not particularly limited herein, but the following mode can be noted as a preferred example.

Next one embodiment of a lithium secondary battery configured using the negative electrode of the lithium secondary battery in the present invention will be described.

The positive electrode of a lithium secondary battery that serves as the counter electrode to the negative electrode disclosed herein can be produced in the conventional manner and has a positive electrode active material layer comprising a positive electrode active material formed on the surface of a positive electrode collector. Preferably a conductive material made of a metal with good conductivity is used as the positive electrode collector. For example, aluminum or an alloy having aluminum as the primary component can be used. The shape of the positive electrode collector is not particularly limited herein because it can differ depending on the shape, etc., of the lithium secondary battery, and it can assume a variety of shapes such as a rod, plate, sheet, foil, and so on.

Moreover, a material capable of absorption and desorption of lithium ions such as an oxide type positive electrode active material with a layered structure or an oxide type positive electrode active material with a spinel structure that has been used in previous lithium secondary batteries can be preferably used as the positive electrode active material comprising the positive electrode active material layer. Examples include lithium transition metal composite oxides such as lithium nickel composite oxides, lithium cobalt composite oxides, and lithium manganese composite oxides.

The term lithium nickel composite oxide used herein encompasses not only oxides having lithium (Li) and nickel (Ni) as constituent metal elements, but also oxides that include at least one type of metal element other than lithium and nickel (i.e., a transition metal element and/or conventional metal element other than Li and Ni) as a constituent metal element typically in a ratio less than nickel (Calculated by the number of atoms. When two or more metal elements other than Li and Ni are included, the ratio of their sum is less than Ni.). The metal element other than Li and Ni can be, for example, one or more types of metal elements selected from the group consisting of cobalt (Co), aluminum (Al), manganese (Mn), chromium (Cr), iron (Fe), vanadium (V), magnesium (Mg), titanium (Ti), zirconium (Zr), niobium (Nb), molybdenum (Mo), tungsten (W), copper (Cu), zinc (Zn), gallium (Ga), indium (In), tin (Sn), lanthanum (La), and cerium (Ce). This definition likewise applies to lithium cobalt composite oxides and lithium manganese composite oxides. It should also be noted that a phosphate compound comprising an olivine-type lithium represented by the general formula LiMPO₄ (wherein M is at least one or more elements from among Co, Ni, Mn, and Fe; e.g., LiFePO₄ or LiMnPO₄) can be used as the positive electrode active material.

Furthermore, a conductive material is added to the material comprising the positive electrode active material layer. Preferably a conductive powder such as carbon powder or carbon fiber is used as this conductive material. Various types of carbon black, for example, acetylene black, furnace black, Ketjen black, graphite powder and the like are preferred as the carbon powder. Moreover, conductive fibers such as carbon fiber and metallic fiber; metal powders such as copper and nickel; and conductive organic materials such as polyphenylene derivatives can be used alone or used together as a mixture. It should also be noted that among these only one type can be used alone, or two or more types can be used together.

In the same way as in the negative electrode, the positive electrode active material and the conductive material along with a suitable binder are dispersed and mixed in a suitable dispersive medium to prepare a paste or a slurry composition for forming the positive electrode active material layer, which then is applied to a positive electrode collector and pressed after drying. Thus, a positive electrode for the lithium secondary battery can be produced thereby.

Moreover, a separator similar to those previously used can be used as the separator to be used together with the positive electrode and negative electrode. For example, a porous plastic separator sheet (e.g., made of a polyolefin such as polyethylene) can be preferably used. It should also be noted that when a solid electrolyte or a gel electrolyte is used as the electrolyte, a separator is unnecessary (in other words, in such cases the electrolyte itself can function as the separator).

A nonaqueous electrolyte (typically an electrolyte solution) similar to those previously used in lithium secondary batteries can be used as the electrolyte without limitation. The polymer solid electrolyte has typically a formulation comprising a supporting electrolyte in a suitable nonaqueous medium. For example, one or more substances selected from the group consisting of propylene carbonate (PC), ethylene carbonate (EC), diethyl carbonate (DEC), dimethyl carbonate (DMC), ethyl methyl carbonate (EMC), etc., can be used as the nonaqueous medium. Moreover, one or more types of lithium compounds (lithium salts) selected, for example, from among LiPF₆, LiBF₄, LiClO₄, LiAsF₆, LiCF₃SO₃, LiC₄F₉SO₃, LiN(CF₃SO₂)₂, LiC(CF₃SO₂)₃, LiI, etc., can be used as the supporting electrolyte.

Moreover, the form (shape and size) of a lithium secondary battery that is constructed using the negative electrode of the lithium secondary battery disclosed herein is not particularly limited herein. The exterior can be a sheet type constituting a laminate film, etc., the battery can have a cylindrical or rectangular outer battery case, or the battery can be of a small button type.

Below, a rectangular lithium secondary battery equipped with a wound electrode assembly is described as a specific example of the lithium secondary battery of the present invention, but the present invention is by no means limited to this embodiment. Moreover, matters necessary for carrying out the present invention other than those specifically referred to in the description (e.g., the construction and method for producing the electrode assembly; the construction and method for producing the separator and electrolyte; common technology related to the construction of batteries other than lithium secondary batteries, etc.) are understood to be matters of design for a person skilled in the art based on the prior art in this field. It should also be noted that in the following drawings, all members and sites providing the same effect are indicated by the same symbols, and redundant descriptions have been omitted or abbreviated. Moreover, the dimensional relationships (of length, width, height, etc.) in the drawings do not depict actual dimensional relationships.

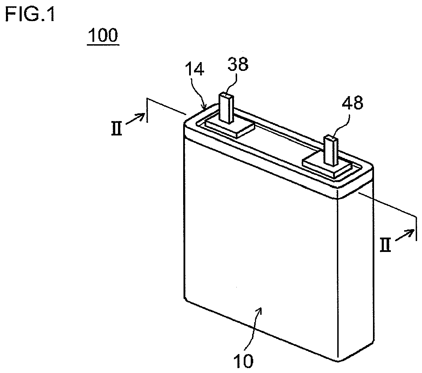

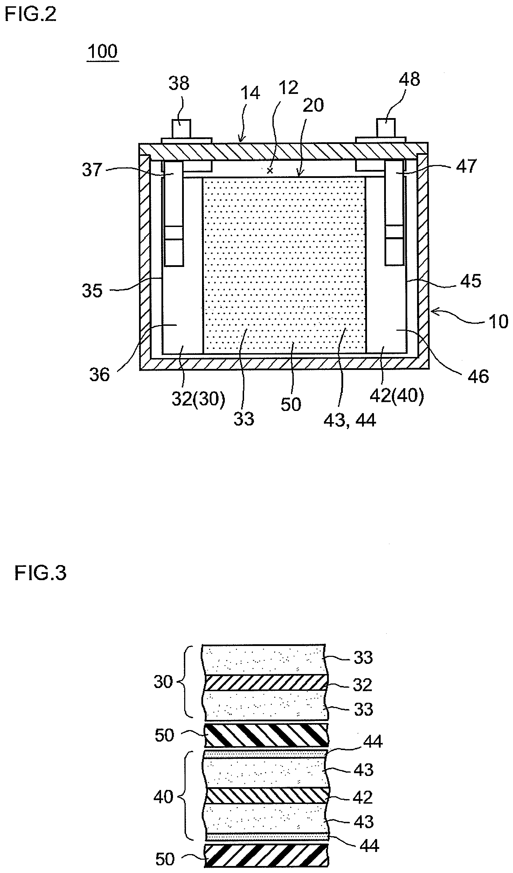

FIG. 1 is a perspective view schematically illustrating the rectangular lithium secondary battery in one embodiment, and FIG. 2 is a cross-sectional drawing of line II-II in FIG. 1. Moreover, FIG. 3 is a cross-sectional drawing illustrating the wound electrode assembly comprising the positive electrode and negative electrode and the separators in one embodiment.

As shown in FIG.1 and FIG. 2, lithium secondary battery 100 in the present embodiment comprises a rectangular parallelepiped battery case 10 as well as a lid 14 sealing the opening 12 in the case 10. The flattened electrode assembly (wound electrode assembly 20) and the electrolyte can be placed in battery case 10 via this opening 12. Furthermore, a positive terminal 38 and a negative terminal 48 for connection to the outside are provided in the lid 14 so that part of each of the terminals 38, 48 protrudes in the direction of the surface of the lid 14. Moreover, parts of the external terminals 38, 48 are connected within the case to an internal positive terminal 37 and an internal negative terminal 47, respectively.

As shown in FIG. 2, the wound electrode assembly 20 is housed in the case 10 in the present embodiment. The above electrode assembly 20 comprises a positive electrode sheet 30 in which a positive electrode active material layer 33 is formed on the surface of a long sheet-like positive electrode collector 32, a negative electrode sheet 40 in which a negative electrode active material layer 43 and an insulating layer 44 are formed on the surface of a long sheet-like negative electrode collector 42, and a long sheet-like separator 50.

Moreover, on the positive electrode sheet 30 to be wound, one end 35 along the lengthwise direction thereof has a part where the positive electrode active material layer 33 is not formed and the positive electrode collector 32 is thereby exposed (a positive electrode active material layer non-formation part 36), and on the negative electrode sheet 40 to be wound, one end 45 along the lengthwise direction thereof has a part where the negative electrode active material layer 43 and the insulating layer 44 are not formed and the negative electrode collector 42 is thereby exposed (a negative electrode active material layer non-formation part 46). When the positive electrode sheet 30 and negative electrode sheet 40 are overlain together with two separator sheets 50, the electrode sheets 30, 40 are offset slightly and positioned such that both active material layers 33, and 43, 44 overlay each other, and the positive electrode active material layer non-formation part 36 of the positive electrode sheet and the negative electrode active material layer non-formation part 46 of the negative electrode sheet are each positioned at opposite ends in the lengthwise direction. As shown in FIG. 3, the four sheets 30, 50, 40, and 50 are laminated and wound, and then the flattened wound electrode assembly 20 is obtained by compressing the resulting wound assembly in the lateral direction.

Next the positive electrode active material layer non-formation part 36 on the positive electrode collector 32 is connected to the internal positive terminal 37, and the exposed part on the negative electrode collector 42 is connected to the internal negative terminal 47 by ultrasonic welding, resistance welding, etc., to electrically connect the positive electrode sheet 30 and negative electrode sheet 40 of the flattened wound electrode assembly 20. The lithium secondary battery 100 in the present embodiment can then be constructed by sealing the opening after housing the resulting wound electrode assembly 20 in the battery case 10 and injecting an electrolyte thereinto.

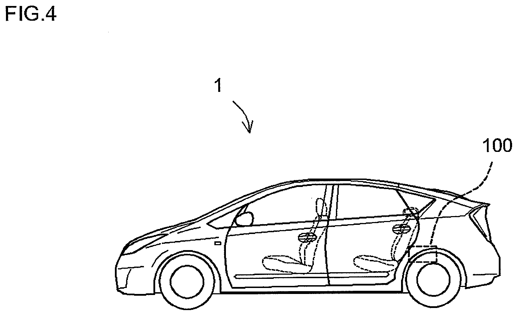

As described above, an increase in internal resistance is suppressed in the lithium secondary battery 100 constructed in this manner, and such a battery can exhibit favorable low temperature cycling characteristics under low temperature pulse charging and discharging conditions as a high output electric power source to be mounted in vehicles. Due to these characteristics, the lithium secondary battery 100 in the present invention can preferably be used as the electric power source for motors (electric motors) to be mounted in vehicles such as automobiles in particular. Therefore, as illustrated schematically in FIG. 4, a vehicle 1 (typically an automobile, and in particular an automobile equipped with an electric motor of the sort found in hybrid automobiles, electric automobiles, and fuel-cell automobiles) is provided that is equipped with the lithium secondary battery 100 (which may be a battery pack comprising a plurality of individual lithium secondary batteries 100 that are aligned and connected in series) as the electric power source.

In the test example below the lithium secondary battery (sample battery) disclosed herein was constructed, and a performance evaluation thereof was conducted. However, it is not intended to limit the present invention to this specific example.

### <Example: Fabrication of lithium secondary battery negative electrode>

The negative electrode (negative electrode sheet) of the lithium secondary battery of the example was fabricated in the following manner. Specifically, a negative electrode active material layer was first formed in order to form the negative electrode layer (negative electrode active material layer and insulating layer) on the surface of the negative electrode collector. The composition for forming the negative electrode active material layer was prepared by mixing natural graphite with a mean particle size (median diameter) of 10 µm as the negative electrode active material with styrene-butadiene rubber (SBR) and carboxymethyl cellulose (CMC) in deionized water such that the mass% ratio of these ingredients was 98:1:1. Then this composition was applied to both surfaces of a copper foil approximately 10 µm thick as the negative electrode collector such that the total applied amount (as solid content) was approximately 10 mg/cm². The composition was then drawn into a sheet with a roller press after drying such that a negative electrode active material layer approximately 50 µm thick (both sides) was formed.

Next the insulating layer was formed on the negative electrode active material layer. In particular, a composition for forming the insulating layer was prepared by mixing alumina particles with a mean particle size (median diameter) of 1 µm as the insulating filler and polyvinylidene difluoride (PVDF) as the binder in N-methyl pyrrolidone (NMP) such that the mass ratio of these ingredients was 96:4. This composition was applied to the entire surface of the negative electrode active material layer such that the total applied amount (as solid content) was approximately 0.5 mg/cm². Then the negative electrode in the present example was fabricated by drawing the composition into a sheet with a roller press after drying to form an insulating layer approximately 8 µm thick (both sides).

### <Comparative example: Fabrication of lithium secondary battery negative electrode>

A negative electrode (negative electrode sheet) for the lithium secondary battery of the comparative example was fabricated. First a negative electrode active material layer was formed on the surface of the negative electrode collector in the same manner as in the example above. Next the applied amount of the composition for forming the insulating layer and the thickness of the insulating layer were changed from those in the above example, and an insulating layer was formed on the negative electrode active material layer by the following procedure. Specifically, a composition for forming the insulating layer was prepared by mixing in N-methyl pyrrolidone (NMP) alumina particles with a mean particle size (median diameter) of 1 µm as the insulating filler and polyvinylidene difluoride (PVDF) as the binder such that the mass ratio of these ingredients was 96:4. This composition was applied to the entire surface of the negative electrode active material layer such that the total applied amount (as solid content) was approximately 0.75 mg/cm². Then the negative electrode in this comparative example was fabricated by drawing the composition into a sheet with a roller press after drying to form an insulating layer approximately 5 µm thick (both sides).

### [Pore Distribution Measurement]

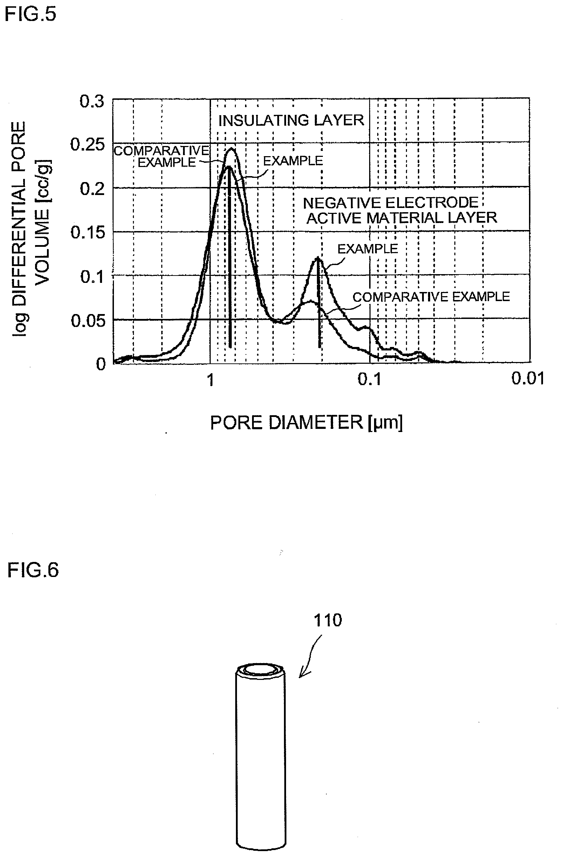

The pore distribution of each of the negative electrode layers (insulating layers and negative electrode active material layers) of the negative electrode produced above was measured by the mercury porosimeter. The measurement results are shown in FIG. 5. Moreover, the measured values of the mode diameter, median diameter, pore size, and pore specific surface area obtained from the pore distribution in FIG. 5 are shown in Table 1.
[Table 1]

**Table 1**

| | | Example | Comparative Example |
|---|---|---|---|
| Mode diameter (µm) | Insulating layer | 0.7317 | 0.7037 |
| | Negative electrode active material layer | 0.2006 | 0.2275 |
| Median diameter d50 (µm) | Insulating layer | 0.7615 | 0.7450 |
| | Negative electrode active material layer | 0.2045 | 0.2340 |
| d10 (µm) | Insulating layer | 1.1050 | 1.0300 |
| | Negative electrode active material layer | 0.1533 | 0.3320 |
| d90 (µm) | Insulating layer | 0.4761 | 0.5170 |
| | Negative electrode active material layer | 0.1801 | 0.1590 |
| Mean size (µm) | Insulating layer | 0.7117 | 0.7104 |
| | Negative electrode active material layer | 0.1931 | 0.2249 |
| Pore specific surface area (m²/g) | Insulating layer | 1.1392 | 1.0836 |
| | Negative electrode active material layer | 1.7644 | 1.1155 |
| Ratio (insulating layer/negative electrode active material layer) | | 1.5488 | 0.9714 |

As shown in FIG. 5, when measured by the mercury porosimeter, the profile of the negative electrode layer pore distribution in the example differs considerably from that in the comparative example. Specifically, in the pore distribution as shown in Table 1 of the negative electrode layer in the embodiment as measured by the mercury porosimeter, it was estimated that the pore size of the negative electrode active material layer was in the range of approximately 0.12 µm to 0.33 µm (median diameters d10, d50, and d90 were 0.15 µm, 0.20 µm, and 0.18 µm, respectively), and it was estimated that the pore size of the insulating layer was in the range of approximately 0.33 µm to 2.1 µm (median diameters d10, d50, and d90 were 1.1 µm, 0.76 µm, and 0.48 µm, respectively). Moreover, the mode diameter of the pores in the negative electrode active material layer was approximately 0.20 µm, and the mode diameter of the pores in the insulating layer was approximately 0.73 µm.

In contrast, in the pore distribution of the negative electrode layer in the comparative example as measured by the mercury porosimeter, it was estimated that the pore size of the negative electrode active material layer was in the range of approximately 0.13 µm to 0.37 µm (median diameters d10, d50, and d90 were 0.33 µm, 0.23 µm, and 0.16 µm, respectively), and it was estimated that the pore size of the insulating layer was in the range of approximately 0.37 µm to 2.2 µm (median diameters d10, d50, and d90 were 1.0 µm, 0.75 µm, and 0.52 µm, respectively). Moreover, the mode diameter of the pores in the negative electrode active material layer was approximately 0.23 µm, and the mode diameter of the pores in the insulating layer was approximately 0.70 µm.

In addition, if the respective pore specific surface areas are examined closely, in the example the ratio (Sb/Sa) of the pore specific surface area of the insulating layer (Sb: m²/g) to the pore specific surface area of the negative electrode active material layer (Sa: m²/g) as measured by the mercury porosimeter is 1.5488 for the negative electrode layer (insulating layer : negative electrode active material layer is approximately 3:2), whereas in the comparative example the ratio (Sb/Sa) is 0.9714 for the negative electrode layer (insulating layer : negative electrode active material layer is approximately 1:1). Therefore, it was confirmed that in the negative electrode layer of the example, pores with pore specific surface areas were formed such that the pore specific surface area of the insulating layer is larger than the pore specific surface area of the negative electrode active material layer.

### <Construction of lithium secondary batteries>

Next the positive electrodes (positive electrode sheets) for the lithium secondary batteries were fabricated. More specifically, a paste for forming the positive electrode active material layer was prepared by mixing a lithium composite oxide (LiNiO₂) as the positive electrode active material with acetylene black as the conductive material and polyvinylidene fluoride (PVDF) as the binder in deionized water such that the mass% ratio of these ingredients was 87:10:3. This paste was applied to both surfaces of approximately 10 µm thick aluminum foil sheets as the positive electrode collectors such that the total applied amount (as solid content) was approximately 6.5 mg/cm². Then positive electrodes were produced by drawing the paste into a sheet with a roller press after drying to form a positive electrode active material layer approximately 60 µm thick (both sides), and then drying once more.

As shown in FIG. 6, cylindrical lithium secondary batteries 18 mm in diameter and 65 mm high (model 18650) were constructed according to the procedure below using the positive electrodes (positive electrode sheets) and the negative electrodes (negative electrode sheets) that were fabricated in the example and comparative example. More specifically, the negative electrode sheet, the positive electrode sheet, and two 25 µm thick separators were laminated, and these laminated sheets were wound to produce wound electrode assemblies. Each electrode assembly was placed into container along with an electrolyte solution, and the opening of the container was sealed to construct lithium secondary battery (sample battery). A mixed solvent prepared by mixing ethylene carbonate (EC) and diethyl carbonate (DEC) at a 3:7 volumetric ratio and then dissolving LiPF₆ as a supporting electrolyte at a concentration of 1 mol/L was used as the electrolyte solution.

### [Low temperature cycling characteristics]

Next the capacity retention of the constructed lithium secondary batteries was investigated as one indicator for evaluating the battery performance by cycling the batteries in a high rate pulse charge/discharge test at a temperature of 0°C.

First, each battery was charged to a 60% SOC (State of Charge) by means of CC/CV (Constant Current/Constant Voltage) charging. Thereafter, 250 charge-discharge cycles of 10 seconds each were repeated at 16 C to 25 C at a temperature of 0°C. It should also be noted that the charge of each battery was adjusted to 60% SOC every 50 cycles. Then the ratio of the battery capacity after 250 cycles to the battery capacity after 1 cycle was calculated as the capacity retention of the battery.

When the lithium secondary batteries subjected to the cycling test with charges and discharges of at 22 C were compared, the capacity retention was 55% for the battery constructed using the negative electrode in the comparative example, but it was 96% for the battery constructed using the negative electrode in the example. These results confirmed that capacity is retained at a high level after cycling.

Therefore, after cycling under high rate pulse charging and discharging under low temperature conditions, the example, which used a negative electrode wherein the ratio (Sb/Sa) of the pore specific surface area of the insulating layer (Sb: m²/g) to the pore specific surface area of the negative electrode active material layer (Sa: m²/g) as measured by the mercury porosimeter was 1.5488, maintained a higher capacity retention than the comparative example, which used a negative electrode wherein the ratio (Sb/Sa) was 0.9714. Thus, these findings confirmed that the ratio of the pore specific surface areas of the insulating layer and negative electrode active material layer can contribute to an improvement in the capacity retention.

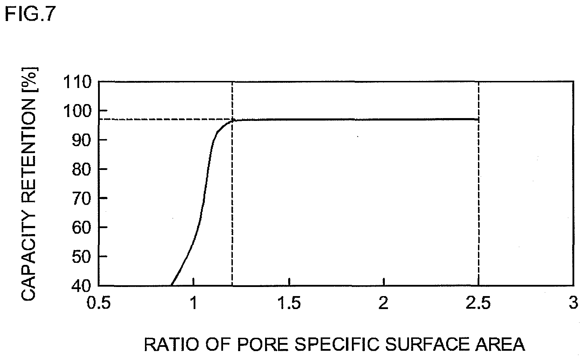

Then a plurality of negative electrode sheets were prepared such that the ratio (Sb/Sa) of the pore specific surface area of the insulating layer (Sb: m²/g) to the pore specific surface area of the negative electrode active material layer (Sa: m²/g), as measured by the mercury porosimeter, ranged from approximately 0.9 to 2.5, and lithium secondary batteries were constructed with each of those sheets (however, the durability of lithium secondary batteries using negative electrode sheets with a value larger than 2.5 for the above ratio declines because the pore specific surface area of the insulating layer is too large, and such batteries were not produced because there is no advantage to forming the insulating layer on the negative electrode active material layer). Then the low temperature cycling characteristics test was conducted in the same manner as above for each battery, and the capacity retention was measured. The results are shown in FIG. 7.

FIG. 7 is a graph illustrating the relationship between the ratio of the pore specific surface area of the insulating layer to the pore specific surface area of the negative electrode active material layer plotted against capacity retention. The horizontal axis shows the ratio of the pore specific surface areas, and the vertical axis shows the capacity retention.

As shown in FIG. 7, lithium secondary batteries with negative electrode sheets exhibiting a value of 1.2 or more for the above ratio were confirmed to maintain a capacity retention of 96% or more even under low temperature and high rate pulse charging and discharging conditions if the spot where the capacity retention ratio falls under 96% is regarded as the limiting current density.

The present invention has been described in detail above, but the embodiment and test examples for carrying out the invention above are merely examples, and the invention disclosed herein also includes embodiments wherein various changes and modifications have been made to the specific examples above. For example, the present invention can also include batteries wherein various details such as the constituent materials of the electrode assembly and the electrolyte differ. Moreover, the size and the configuration of the battery can be preferably changed according to its intended use (typically in vehicles).

### INDUSTRIAL APPLICABILITY

As described above, the lithium secondary battery of the present invention including a negative electrode comprising a negative electrode active material layer composed primarily of a negative electrode active material and an insulating layer composed primarily of an insulating filler and formed on the negative electrode active material layer can be preferably used as the electric power source for motors (electric motors), particularly motors to be mounted in vehicles such as automobiles, because an increase in internal resistance has been suppressed and the battery has favorable low temperature cycling characteristics under low temperature pulse charge/discharge conditions. Therefore, as illustrated schematically in FIG. 4, the present invention provides a vehicle 1 (typically an automobile, and in particular an automobile equipped with an electric motor of the sort found in hybrid automobiles, electric automobiles, and fuel-cell automobiles) equipped with a lithium secondary battery 100 (typically a battery pack comprising a plurality of individual cells that are connected in series) as the electric power source.

## Claims

1. A lithium secondary battery comprising a negative electrode having a negative electrode collector and a negative electrode layer including a negative electrode active material and formed on the surface of the negative electrode collector,
wherein the negative electrode layer comprises a negative electrode active material layer composed primarily of a negative electrode active material, and an insulating layer composed primarily of an insulating filler and formed on the negative electrode active material layer, and
a ratio (Sb/Sa) of a pore specific surface area of the insulating layer (Sb: m²/g) to a pore specific surface area of the negative electrode active material layer (Sa: m²/g), as measured by a mercury porosimeter, satisfies the relationship 1.2 ≤ (Sb/Sa) ≤ 2.5, and
in a pore distribution of the negative electrode layer as measured by the mercury porosimeter, the mode diameter of pores in the negative electrode active material layer is 0.19 µm to 0.21 µm, and the mode diameter of pores in the insulating layer is 0.72 µm to 0.75 µm.

2. The lithium secondary battery according to claim 1, wherein a carbon material with a mean particle size (median diameter) of 1 µm to 50 µm based on a laser diffraction particle size distribution measurement is used as the negative electrode active material, and an inorganic oxide with a mean particle size (median diameter) of 0.1 µm to 15 µm based on the laser diffraction particle size distribution measurement is used as the insulating filler.

3. The lithium secondary battery according to claim 1 or 2, wherein at least one material selected from the group consisting of alumina, silica, and magnesia is used as the inorganic oxide.

4. A method for producing a lithium secondary battery including a negative electrode having a negative electrode collector and a negative electrode layer including a negative electrode active material and formed on the surface of the negative electrode collector, the method comprising the steps of:
providing a negative electrode active material layer composed primarily of a negative electrode active material on the surface of the negative electrode collector, and providing an insulating layer composed primarily of an insulating filler on the negative electrode active material layer, to thereby prepare a negative electrode in which a negative electrode layer comprising the negative electrode active material layer and the insulating layer is formed on the negative electrode collector,
wherein the negative electrode layer is formed such that a ratio (Sb/Sa) of a pore specific surface area of the insulating layer (Sb: m²/g) to a pore specific surface area of the negative electrode active material layer (Sa: m²/g), as measured by a mercury porosimeter, satisfies the relationship 1.2 ≤ (Sb/Sa) ≤ 2.5, and
the negative electrode layer is formed by providing the negative electrode active material layer such that the mode diameter of pores therein is 0.19 µm to 0.21 µm in a pore distribution of the negative electrode layer as measured by the mercury porosimeter, and by providing the insulating layer such that the mode diameter of pores therein is 0.72 µm to 0.75 µm in the pore distribution.

5. The production method according to claim 4, wherein a carbon material with a mean particle size (median diameter) of 0.5 µm to 20 µm based on a laser diffraction particle size distribution measurement is used as the negative electrode active material, and an inorganic oxide with a mean particle size (median diameter) of 0.1 µm to 5 µm based on the laser diffraction particle size distribution measurement is used as the insulating filler.

6. The production method according to claim 4 or 5, wherein at least one material selected from the group consisting of alumina, silica, and magnesia is used as the inorganic oxide.

7. A vehicle comprising the lithium secondary battery according to any of claims 1 to 3.

## Patentansprüche

1. Lithiumsekundärbatterie, die eine Negativelektrode umfasst, die einen Negativelektrodenstromabnehmer und eine Negativelektrodenschicht aufweist, die ein Negativelektrodenaktivmaterial beinhaltet und auf der Oberfläche des Negativelektrodenstromabnehmers gebildet ist,
wobei die Negativelektrodenschicht eine Negativelektrodenaktivmaterialschicht, die hauptsächlich aus einem Negativelektrodenaktivmaterial aufgebaut ist, und eine isolierende Schicht umfasst, die hauptsächlich aus einem isolierenden Füllstoff aufgebaut ist und auf der Negativelektrodenaktivmaterialschicht gebildet ist, und
ein Verhältnis (Sb/Sa) einer porenspezifischen Oberfläche der isolierenden Schicht (Sb: m²/g) zu einer porenspezifischen Oberfläche der Negativelektrodenaktivmaterialschicht (Sa: m²/g), wie sie durch ein Quecksilberporosimeter gemessen werden, die Beziehung 1,2 ≤ (Sb/Sa) ≤ 2,5 erfüllt, und
in einer Porenverteilung der Negativelektrodenschicht, wie sie durch das Quecksilberporosimeter gemessen wird, der Modusdurchmesser von Poren in der Negativelektrodenaktivmaterialschicht 0,19 µm bis 0,21 µm ist, und der Modusdurchmesser von Poren in der isolierenden Schicht 0,72 µm bis 0,75 µm ist.

2. Lithiumsekundärbatterie nach Anspruch 1, wobei ein Kohlenstoffmaterial mit einem mittleren Teilchendurchmesser (medianer Durchmesser) basierend auf einer Laserbeugungsteilchengrößenverteilungsmessung von 1 µm bis 50 µm als das Negativelektrodenaktivmaterial verwendet wird, und ein anorganisches Oxid mit einer mittleren Teilchengröße (medianer Durchmesser basierend auf der Laserbeugungsteilchengrößenverteilungsmessung von 0,1 µm bis 15 µm als der isolierende Füllstoff verwendet wird.

3. Lithiumionensekundärbatterie nach Anspruch 1 oder 2, wobei wenigstens ein Material bestehend aus der Gruppe aus Aluminiumoxid, Siliciumoxid und Magnesiumoxid als das anorganische Oxid verwendet wird.

4. Verfahren für die Herstellung einer Lithiumionensekundärbatterie einschließlich einer Negativelektrode, die einen Negativelektrodenstromabnehmer und eine Negativelektrodenschicht aufweist, die ein Negativelektrodenaktivmaterial beinhaltet und auf der Oberfläche des Negativelektrodenstromabnehmers gebildet wird, das Verfahren die Schritte umfasst:
Bereitstellen einer Negativelektrodenaktivmaterialschicht, die hauptsächlich aus einem Negativelektrodenaktivmaterial besteht, auf der Oberfläche des Negativelektrodenstromabnehmers, und Bereitstellen einer isolierenden Schicht, die hauptsächlich aus einem isolierenden Füllstoff besteht, auf der Negativelektrodenaktivmaterialschicht, um dadurch eine Negativelektrode zuzubereiten, in welcher eine Negativelektrodenschicht mit der Negativelektrodenaktivmaterialschicht und der isolierenden Schicht auf dem Negativelektrodenstromabnehmer gebildet ist,
wobei die Negativelektrodenschicht derartig gebildet wird, dass ein Verhältnis (Sb/Sa) einer porenspezifischen Oberfläche der isolierenden Schicht (Sb: m²/g) zu einer porenspezifischen Oberfläche der Negativelektrodenaktivmaterialschicht (Sa: m²/g), wie sie durch ein Quecksilberporosimeter gemessen werden, die Beziehung 1,2 ≤ (Sb/Sa) ≤ 2,5 erfüllt, und
die Negativelektrodenschicht gebildet wird durch Bereitstellen der Negativelektrodenaktivmaterialschicht derartig, dass der Modusdurchmesser von Poren darin in einer Porenverteilung der Negativelektrodenschicht, wie sie durch das Quecksilberporosimeter gemessen wird, 0,19 µm bis 0,21 µm ist, und durch Bereitstellen der isolierenden Schicht derartig, dass der Modusdurchmesser von Poren darin 0,72 µm bis 0,75 µm in der Porenverteilung ist.

5. Herstellungsverfahren nach Anspruch 4, wobei ein Kohlenstoffmaterial mit einem mittleren Teilchendurchmesser (medianer Durchmesser) basierend auf einer Laserbeugungsteilchengrößenverteilungsmessung von 0,5 µm bis 20 µm als das Negativelektrodenaktivmaterial verwendet wird, und ein anorganisches Oxid mit einer mittleren Teilchengröße (medianer Durchmesser) basierend auf der Laserbeugungsteilchengrößenverteilungsmessung von 0,1 µm bis 5 µm als der isolierenden Füllstoff verwendet wird.

6. Herstellungsverfahren nach Anspruch 4 oder 5, wobei wenigstens ein Material bestehend aus der Gruppe aus Aluminiumoxid, Siliciumoxid und Magnesiumoxid als das anorganische Oxid verwendet wird.

7. Fahrzeug mit der Lithiumionensekundärbatterie nach einem der Ansprüche 1 bis 3.

## Revendications

1. Batterie secondaire au lithium comprenant une électrode négative ayant un collecteur d'électrode négative et une couche d'électrode négative comprenant un matériau actif d'électrode négative et formée sur la surface du collecteur d'électrode négative,
dans laquelle la couche d'électrode négative comprend une couche de matériau actif d'électrode négative composée principalement d'un matériau actif d'électrode négative et une couche isolante composée principalement d'une charge d'isolation et formée sur la couche de matériau actif d'électrode négative, et
un rapport (Sb/Sa) entre une aire surfacique spécifique de pores de la couche isolante (Sb:m²/g) et une aire surfacique spécifique de pores de la couche de matériau actif d'électrode négative (Sa:m²/g), mesurée par un porosimètre au mercure, répond à la relation 1,2 ≤ (Sb/Sa) ≤ 2,5, et
dans une distribution de pores de la couche d'électrode négative, telle que mesurée par le porosimètre au mercure, le diamètre modal des pores dans la couche de matériau actif d'électrode négative est de 0,19 µm à 0,21 µm et le diamètre modal des pores dans la couche isolante est de 0,72 µm à 0,75 µm.

2. Batterie au lithium secondaire selon la revendication 1, dans laquelle un matériau carboné ayant une taille moyenne de particules (diamètre médian) de 1 µm à 50 µm basée sur une mesure de la distribution des tailles de particules par diffraction au laser est utilisé comme matériau actif d'électrode négative et un oxyde inorganique ayant une taille moyenne de particules (diamètre médian) de 0,1 µm à 15 µm sur la base de la mesure de la distribution des tailles de particules par diffraction au laser est utilisé comme charge d'isolation.

3. Batterie au lithium secondaire selon la revendication 1 ou 2, dans laquelle au moins un matériau choisi dans le groupe constitué de l'alumine, de la silice et de la magnésie est utilisé comme oxyde inorganique.

4. Procédé de production d'une batterie au lithium secondaire comprenant une électrode négative ayant un collecteur d'électrode négative et une couche d'électrode négative comprenant un matériau actif d'électrode négative et formée sur la surface du collecteur d'électrode négative, le procédé comprenant les étapes de :
fourniture d'une couche de matériau actif d'électrode négative composée principalement d'un matériau actif d'électrode négative sur la surface du collecteur d'électrode négative, et fourniture d'une couche isolante composée principalement d'une charge isolante sur la couche de matériau actif d'électrode négative, ce qui permet ainsi de préparer une électrode négative dans laquelle une couche d'électrode négative comprenant la couche de matériau actif d'électrode négative et la couche isolante est formée sur le collecteur d'électrode négative,
dans lequel la couche d'électrode négative est formée de telle sorte qu'un rapport (Sb/Sa) entre une aire surfacique spécifique de pores de la couche isolante (Sb:m²/g) et une aire surfacique spécifique de pores de la couche de matériau actif d'électrode négative (Sa:m²/g), mesurée par un porosimètre au mercure, répond à la relation 1,2 ≤ (Sb/Sa) ≤ 2,5, et
la couche d'électrode négative est formée par la fourniture de la couche de matériau actif d'électrode négative de telle sorte que le diamètre modal des pores dans celle-ci soit de 0,19 µm à 0,21 µm dans une distribution de pores de la couche d'électrode négative telle que mesurée par le porosimètre au mercure et par la fourniture de la couche isolante de telle sorte que le diamètre modal des pores dans celle-ci soit de 0,72 µm à 0,75 µm dans la distribution des pores.

5. Procédé de production selon la revendication 4, dans lequel un matériau carboné ayant une taille moyenne de particules (diamètre médian) de 0,5 µm à 20 µm basée sur une mesure de la distribution des tailles de particules par diffraction au laser est utilisé comme matériau actif d'électrode négative et un oxyde inorganique ayant une taille moyenne de particules (diamètre médian) de 0,1 µm à 5 µm sur la base de la mesure de la distribution des tailles de particules par diffraction au laser est utilisé comme charge d'isolation.

6. Procédé de production selon la revendication 4 ou 5, dans lequel au moins un matériau choisi dans le groupe constitué de l'alumine, de la silice et de la magnésie est utilisé comme oxyde inorganique.

7. Véhicule comprenant la batterie au lithium secondaire selon l'une quelconque des revendications 1 à 3.
